# EUROPEAN PATENT APPLICATION

(11) **EP 4 451 032 A1**
(43) Date of publication of application: **23.10.2024**
(21) Application number: 22907238.4
(22) Date of filing: 01.12.2022
(51) Int. Cl.: G02B 7/00, G01S 7/481

(54) **PHOTODETECTION DEVICE AND MANUFACTURING METHOD THEREOF**

(30) Priority: 16.12.2021 JP 2021204553
(71) Applicant: DENSO CORPORATION, Kariya-city, Aichi 448-8661 (JP); DENSO WAVE INCORPORATED, Agui-cho Chita-gun, Aichi 470-2297 (JP)
(72) Inventor: ASAMI, Hiroshi, Kariya-city Aichi 4488661 (JP); OGAWA, Akira, Kariya-city Aichi 4488661 (JP); IMAI, Yusuke, Chita-gun Aichi 470-2297 (JP)
(74) Representative: Kuhnen & Wacker Patent- und Rechtsanwaltsbüro PartG mbB
(86) International application number: PCT/JP2022/044456
(87) International publication number: WO 2023/112710

(57) **Abstract**

A photodetection device includes: a base (11) that defines first and second reference directions perpendicular to each other; a projection holder (61) positioned in the first and second reference directions with respect to the base (11); a projection unit (21) having a projector (22) held by the base (11) and a projection lens system (26) held by the projection holder (61) on a projection optical axis (POA) perpendicular to the first and second reference directions; a first projection shim (64) replaceably interposed between the base (11) and the projection holder (61), in a first projection gap (63a) that extends along the first reference direction; a second projection shim (66) replaceably interposed between the base (11) and the projection holder (61), in a second projection gap (63c) that extends along a projection intersecting direction (PD) that intersects the first and second reference directions; and a light projection screw (68) that fixes the projection holder (61) to the base (11) by screwing along the first reference direction.

## Description

### CROSS REFERENCE TO RELATED APPLICATION

This application is based on Japanese Patent Application No. 2021-204553 filed on December 16, 2021, the contents of the application are incorporated by reference in its entirety.

### TECHNICAL FIELD

The present disclosure relates to a photodetection device and a method of manufacturing the photodetection device.

### BACKGROUND ART

A photodetection device is widely known, which projects a projection beam toward outside and detects a reflected beam that is the projection beam reflected from outside. For example, in a photodetection device disclosed in Patent Document 1, a light source holding member that holds a light source and a lens holding member that holds a lens are positioned and fixed to a base member. In the photodetection device disclosed in Patent Document 1, a structure having a reference plane is proposed in order to adjust the position of the lens holding member with respect to the base member in the optical axis direction of the lens.

### PRIOR ART LITERATURE

### PATENT LITERATURE

Patent Document 1: JP 2017-3938 A

### SUMMARY OF INVENTION

However, in the photodetection device disclosed in Patent Document 1, the position of the light source holding member is merely adjusted along a reference plane of the base member perpendicular to the lens optical axis. The position of the light source holding member needs to be adjusted in a given direction perpendicular to the lens optical axis, but it is difficult to ensure the accuracy of the position adjustment in the given direction. Furthermore, the light source holding member needs to be screwed at multiple locations around the lens after adjusting its position in the direction perpendicular to the lens optical axis. The positioning accuracy is easily lowered, during the screwing, if the position of the light source holding member is shifted on the reference plane. These issues are obstacles to ensuring desired optical properties.

An object of the present disclosure is to provide a photodetection device that ensures desired optical characteristics and a method for manufacturing the photodetection device.

Hereinafter, technical means of the present disclosure for solving the problems will be described.

According to a first aspect of the present disclosure,
a photodetection device configured to project a projection beam toward outside and detect a reflected beam that is the projection beam reflected from the outside, the photodetection device includes:
a base that is positionable with respect to an arrangement target and defines a first reference direction and a second reference direction orthogonal to each other;
a projection holder positioned with respect to the base in the first reference direction and the second reference direction;
a projection unit including a projector held by one of the base and the projection holder, and a projection lens system held by the other of the base and the projection holder, so as to guide the projection beam emitted from the projector through the projection lens system, the projector and the projection lens system being aligned on a projection optical axis perpendicular to the first reference direction and the second reference direction;
a first projection shim replaceably interposed between the base and the projection holder, in a first projection gap extending along the first reference direction;
a second projection shim replaceably interposed between the base and the projection holder, in a second projection gap extending along a projection intersecting direction intersecting the first reference direction and the second reference direction; and
a light projection screw that fixes the projection holder to the base by screwing along the first reference direction.

According to the first aspect, the base defines the first reference direction and the second reference direction that are orthogonal to each other, and the projection holder is positioned in these reference directions with respect to the base that can be positioned with respect to the arrangement target. One of the base and the light projection holder and the other hold the projector and the projection lens system, respectively. Therefore, between the base and the projection holder, the first projection shim is disposed in the first projection gap that extends along the first reference direction, and the second projection shim is disposed in the second projection gap that extends along the projection intersecting direction intersecting the first reference direction and the second reference direction.

Accordingly, the positions of the projector and the projection lens system can be adjusted on the projection optical axis orthogonal to the first reference direction and the second reference direction, by adjusting the relative positions of the base and the projection holder in the first reference direction and the second reference direction, in response to the size adjustment of the first projection shim and the second projection shim, which are replaceable for the first projection gap and the second projection gap, respectively. Furthermore, at the intervening interface of the second projection shim that spreads along the projection intersecting direction, the axial force of the light projection screw due to the screw fastening along the first reference direction can be dispersed in the second reference direction, so that the projection holder can be fixed while being positioned with respect to the base. Therefore, it is possible to ensure the desired optical characteristics of the projection beam as a predetermined optical property.

According to a second aspect of the present disclosure,
a method of manufacturing the photodetection device of the first aspect, the method includes:
holding the projector by one of the base and the projection holder, and holding the projection lens system by the other of the base and the projection holder;
temporarily fixing a relative position of the projection holder with respect to the base, and acquiring a light projection shift amount of the projection beam with respect to the projection optical axis in the first reference direction and the second reference direction; and
disposing the first projection shim and the second projection shim, each having a size corresponding to the light projection shift amount, respectively in the first projection gap and the second projection gap, and fixing the projection holder to the base by the light projection screw.

According to the second aspect, the relative position of the projection holder with respect to the base is temporarily fixed, and the light projection shift amount of the projection beam with respect to the projection optical axis is obtained in the first reference direction and the second reference direction. Therefore, the first projection shim and the second projection shim having the size matching the light projection shift amount are inserted into the first projection gap and the second projection gap, respectively, and the projection holder is fixed to the base by the light projection screw.

Accordingly, the size adjustment of the first projection shim and the second projection shim installed in the first projection gap and the second projection gap, respectively, is optimized for positioning the projector and the projection lens system. At the same time, the position adjustment of the projection holder relative to the base can be completed. Furthermore, the axial force of the light projection screw due to the screwing along the first reference direction is dispersed in the second reference direction, so that the projection holder can be fixed while being positioned with respect to the base. Therefore, it is possible to ensure the desired optical characteristics of the projection beam.

According to a third aspect of the present disclosure,
a photodetection device configured to project a projection beam toward outside and detect a reflected beam that is the projection beam reflected from the outside, the photodetection device includes:
a base that is positionable with respect to an arrangement target and defines a first reference direction and a second reference direction orthogonal to each other;
a light receiving holder positioned with respect to the base in the first reference direction and the second reference direction;
a light receiving unit including a receiver held by one of the base and the light receiving holder, and a light receiving lens system held by the other of the base and the light receiving holder, so as to image the reflected beam received by the receiver through the light receiving lens system, the receiver and the light receiving lens system being aligned on a receiving optical axis perpendicular to the first reference direction and the second reference direction;
a first light receiving shim replaceably interposed between the base and the light receiving holder, in a first light receiving gap extending along the first reference direction;
a second light receiving shim replaceably interposed between the base and the light receiving holder, in a second light receiving gap extending along a light receiving intersecting direction intersecting the first reference direction and the second reference direction; and
a light receiving screw that fixes the light receiving holder to the base by screwing along the first reference direction.

According to the third aspect, the base defines the first reference direction and the second reference direction that are orthogonal to each other, and the light receiving holder is positioned in these reference directions with respect to the base that can be positioned with respect to the arrangement target. The receiver and the light receiving lens system are held by one and the other of the base and the light receiving holder, respectively. Therefore, between the base and the light receiving holder, the first light receiving shim is disposed in the first light receiving gap that extends along the first reference direction, and the second light receiving shim is disposed in the second light receiving gap extending in the light receiving intersecting direction that intersects the first reference direction and the second reference direction.

Accordingly, the positions of the receiver and the light receiving lens system are adjusted on the receiving optical axis orthogonal to the reference directions, by adjusting the relative positions of the base and the light receiving holder in the first reference direction and the second reference direction, in response to the size adjustment of the first light receiving shim and the second light receiving shim, which are replaceable with respect to the first light receiving gap and the second light receiving gap, respectively. Furthermore, at the installation interface of the second light receiving shim, which spreads along the light receiving intersecting direction, the axial force of the light receiving screw caused by the screw fastening along the first reference direction is distributed also in the second reference direction, so that the light receiving holder can be fixed to the base in the position-fixed state. Therefore, it becomes possible to ensure the light reception characteristics of the reflected beam as the desired optical characteristics.

According to a fourth aspect of the present disclosure,
a method of manufacturing the photodetection device of the third aspect, the method includes:
holding the receiver by one of the base and the light receiving holder, and holding the light receiving lens system by the other of the base and the light receiving holder;
temporarily fixing a relative position of the light receiving holder with respect to the base, and acquiring a light receiving shift amount of the reflected beam with respect to the receiving optical axis in the first reference direction and the second reference direction; and
disposing the first light receiving shim and the second light receiving shim, each having a size corresponding to the light receiving shift amount, respectively in the first light receiving gap and the second light receiving gap, and fixing the light receiving holder to the base by the light receiving screw.

According to the fourth aspect, the relative position of the light receiving holder with respect to the base is temporarily fixed, and the light receiving shift amount of the reflected beam with respect to the receiving optical axis is acquired in the first reference direction and the second reference direction. Therefore, the first light receiving shim and the second light receiving shim having the size matching the light receiving shift amount are interposed in the first light receiving gap and the second light receiving gap, respectively, and the light receiving screw screws the light receiving holder to the base.

This makes it possible to optimize the size adjustment of the first light receiving shim and the second light receiving shim that are respectively inserted into the first light receiving gap and the second light receiving gap for the alignment of the receiver and the light receiving lens system, while simultaneously completing the position adjustment of the light receiving holder relative to the base. Furthermore, the axial force of the light receiving screw due to the screwing along the first reference direction is dispersed in the second reference direction, so that the light receiving holder can be fixed while being positioned relative to the base. Therefore, it becomes possible to ensure the light reception characteristics of the reflected beam as the desired optical characteristics.

### BRIEF DESCRIPTION OF DRAWINGS

FIG. 1 is a cross-sectional view showing an overall configuration of a photodetection device according to an embodiment.
FIG. 2 is a schematic diagram showing a projector of the embodiment.
FIG. 3 is a schematic diagram showing a receiver of the embodiment.
FIG. 4 is a front view showing a positioning structure for the photodetection device of the embodiment.
FIG. 5 is a cross-sectional view showing a positioning structure for the photodetection device of the embodiment.
FIG. 6 is a cross-sectional view showing a positioning structure for the photodetection device of the embodiment.
FIG. 7 is a plan view showing an example of a first projection shim of the embodiment.
FIG. 8 is a plan view showing another example of a first projection shim of the embodiment.
FIG. 9 is a plan view showing another example of a first projection shim of the embodiment.
FIG. 10 is a plan view showing an example of a second projection shim of the embodiment.
FIG. 11 is a plan view showing another example of a second projection shim of the embodiment.
FIG. 12 is a plan view showing another example of a second projection shim of the embodiment.
FIG. 13 is a flowchart illustrating a manufacturing method according to the embodiment.
FIG. 14 is a schematic diagram for explaining a manufacturing method of the embodiment.
FIG. 15 is a schematic diagram for explaining a manufacturing method of the embodiment.
FIG. 16 is a schematic diagram for explaining a manufacturing method of the embodiment.
FIG. 17 is a schematic diagram for explaining a manufacturing method of the embodiment.
FIG. 18 is a schematic diagram for explaining a manufacturing method of the embodiment.
FIG. 19 is a schematic diagram for explaining a manufacturing method of the embodiment.
FIG. 20 is a schematic diagram showing a projection unit according to a modification.
FIG. 21 is a schematic diagram showing a light receiving unit according to a modification.

### DETAILED DESCRIPTION

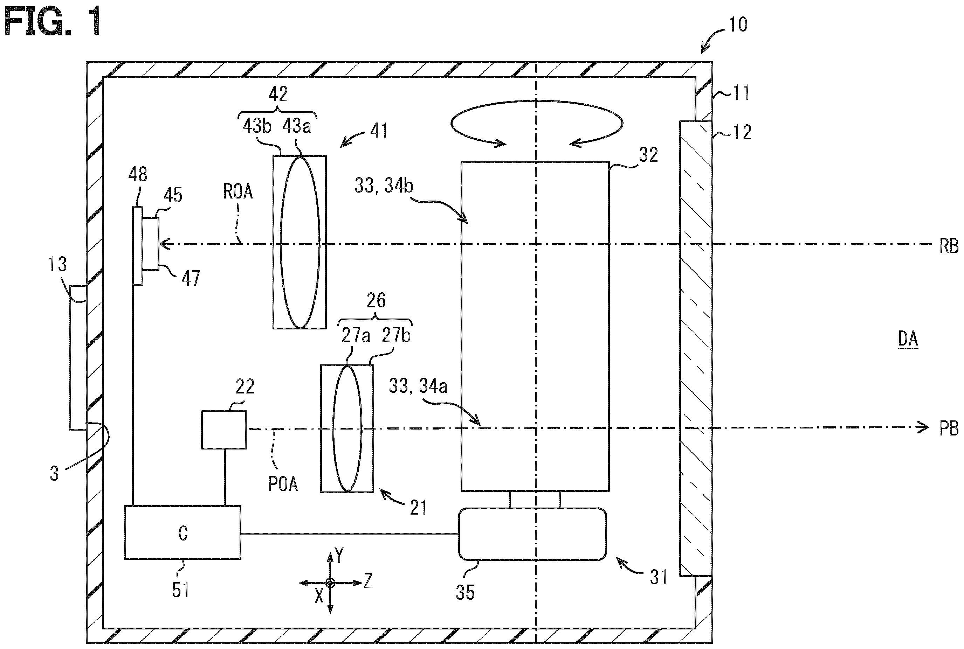

As shown in FIG. 1, a photodetection device 10 according to an embodiment of the present disclosure is a LiDAR (Light Detection and Ranging / Laser Imaging Detection and Ranging) device disposed on a moving body to optically observe the outside. The moving body to which the photodetection device 10 is placed is a vehicle, such as a car, that can perform at least one type of operation among manual operation, automatic operation, and remote operation. In the following description, unless otherwise specified, each direction indicated by the front, the rear, the top, the bottom, the left, and the right is defined with respect to the vehicle on a horizontal plane. In the following description, the horizontal direction and the vertical direction refer to a direction parallel to the horizontal plane and a direction perpendicular to the horizontal plane, respectively, when the vehicle is on the horizontal plane. Furthermore, in the following description, the gravity direction means a downward direction in the vertical direction of a vehicle on a horizontal plane.

The photodetection device 10 is disposed at least one location in the vehicle, for example, among the front portion, the lateral such as left or right portion, the rear portion, the upper roof, and the like. The photodetection device 10 projects a projection beam PB toward a detection area DA outside of the vehicle, which corresponds to the location of the vehicle. The photodetection device 10 detects, as a reflected beam RB, return light that is returned when the projection beam PB is reflected by a target object in the detection area DA out of the vehicle. The projection beam PB, which becomes the reflected beam RB, uses near-infrared light that is difficult for humans to see.

The photodetection device 10 observes the target object in the detection area DA by detecting the reflected beam RB. Observation of the target object refers to at least one of, for example, a distance from the photodetection device 10 to the target, a direction in which the target exists, and a reflection intensity of the reflected beam RB from the target. A typical target to be observed by the photodetection device 10 for a vehicle may be at least one type of moving object such as a pedestrian, a cyclist, an animal other than a human, or another vehicle. A typical target to be observed in the photodetection device 10 for a vehicle is at least one type of stationary object such as a guardrail, a road sign, a structure on a road side, or a fallen object on the road.

A three-dimensional orthogonal coordinate system is defined in the photodetection device 10 by three mutually orthogonal reference directions X, Y, and Z. In this embodiment, the first reference direction Y is defined along the vertical direction of the vehicle, and the second reference direction X and the third reference direction Z are defined along the horizontal direction of the vehicle. In FIG. 1, the right side of the single chain line along the first reference direction Y (adjacent to the optical window 12, which will be described later) is actually a cross section perpendicular to the left part of the single chain line (adjacent to the unit 21, 41, which will be described later).

The photodetection device 10 includes a base 11, a light projection unit 21, a scanning unit 31, a light receiving unit 41, and a controller 51. The base 11 has light-shielding property, for example, made of metal or resin and is shaped like a box. The base 11 houses the light projection unit 21, the scanning unit 31, and the light receiving unit 41 therein. The base 11 has an opening that is closed by an optical window 12. The translucent optical window 12 is formed into a plate shape, for example, made of resin or glass.

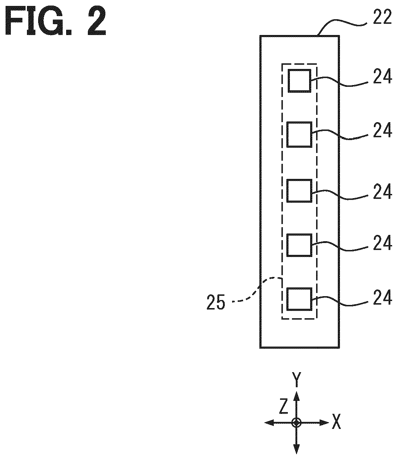

The light projection unit 21 includes a projector 22 and a projection lens system 26. As shown in FIG. 2, the projector 22 is constructed by plural laser oscillation elements 24 in an array on a substrate. In this embodiment, the laser oscillation elements 24 are arranged in a single row along the first reference direction Y. Each laser oscillation element 24 emits a coherent laser beam with a uniform phase due to the resonator structure that resonates the laser beam oscillated in the PN junction layer, and the mirror layer structure that repeatedly reflects the laser beam with the PN junction layer in between. Each laser oscillation element 24 generates pulsed laser light, which becomes a part of the projection beam PB, in accordance with a control signal from the controller 51.

The projector 22 has a light projection port 25 formed on one side of the substrate, to be quasi-defined as a rectangular contour whose long sides along the first reference direction Y and whose short sides along the second reference direction X. The light projection port 25 is configured as a collection of laser oscillation apertures in each laser oscillation element 24. The laser light projected from the laser oscillation aperture of each laser oscillation element 24 is emitted from the light projection port 25 in the detection area DA shown in FIG. 1 as the projection beam PB shaped in a line having a longitudinal direction along the first reference direction Y and the short side along the second reference direction X.

As shown in FIG. 1, the projection lens system 26 is constructed such that at least one light projection lens 27a is held by a lens barrel 27b. The light projection lens 27a has light-transmitting property, and is mainly made of a base material such as resin or glass and formed into a lens shape depending on the optical effect to be exerted. The light projection lens 27a performs at least one kind of optical action on the projection beam PB from the projector 22, such as condensing, collimating, and shaping. The light projection lens 27a is positioned within the lens barrel 27b formed of, for example, metal or resin.

The projection lens system 26 having such a configuration is aligned with the projector 22 so as to form a projection optical axis POA along the third reference directions Z perpendicular to the first reference direction Y and the second reference direction X, as a virtual optical axis extending from the center of the light projection port 25 to the center of the light projection lens 27a. Therefore, the principal ray of the projection beam PB emitted from the projector 22 is guided along the projection optical axis POA by receiving an optical action from the projection lens system 26.

The scanning unit 31 includes a scanning mirror 32 and a scanning motor 35. The scanning mirror 32 is formed in a plate shape mainly made of a base material such as synthetic resin or glass. In the scanning mirror 32, a reflective film of aluminum, silver, gold, or the like is deposited on one side of the base material, so that the reflective surface 33 is formed into a mirror-like shape.

The scanning mirror 32 is supported by the base 11 so as to be rotatably driven around a rotation center line along the first reference direction Y. The scanning mirror 32 swings and rotates within a limited drive range by a mechanical or electrical stopper. The scanning mirror 32 has a projection reflecting portion 34a used for projecting the projection beam PB and a light receiving reflecting portion 34b used for receiving the reflected beam RB, which are shifted in the first reference direction Y on the reflective surface 33.

The scanning motor 35 is, for example, a voice coil motor, a brushed DC motor, a stepping motor, or the like. The output shaft of the scanning motor 35 is coupled to the scanning mirror 32 directly or indirectly via a driving mechanism such as a reducer. The scanning motor 35 is held by the base 11 so as to rotate the scanning mirror 32 together with its output shaft. The scanning motor 35 rotates the scanning mirror 32 in accordance with a control signal from the controller 51.

The projection beam PB is transmitted through the optical window 12 after being reflected from the projection reflecting portion 34a in accordance with the rotational drive of the scanning mirror 32 by the scanning motor 35, and is scanned toward the detection area DA outside of the vehicle. At this time, the scanning of the projection beam PB on the detection area DA is substantially limited to scanning in the horizontal direction in accordance with the rotational drive of the scanning mirror 32.

The projection beam PB is reflected by a target existing in the detection area DA outside of the vehicle, and becomes a reflected beam RB that passes through the optical window 12 again and enters the light receiving reflecting portion 34b of the scanning mirror 32. At this time, the speeds of the projection beam PB and reflected beam RB are sufficiently large compared to the rotational driving speed of the scanning mirror 32. As a result, the reflected beam RB receives a reflection action from the light receiving reflecting portion 34b of the scanning mirror 32, which can be simulated to have substantially the same rotation angle as the projection beam PB, so that the reflected beam RB is guided to the light receiving unit 41 in a direction opposite to the projection beam PB.

The light receiving unit 41 includes a light receiving lens system 42 and a receiver 45. The light receiving lens system 42 is constructed such that at least one light receiving lens 43a is held by a lens barrel 43b. The light receiving lens 43a is mainly made of a base material such as resin or glass, and is formed into a lens shape depending on the optical effect to be exerted. The light receiving lens 43a exerts an optical effect to form an image of the reflected beam RB from the scanning mirror 32 on the receiver 45. The light receiving lens 43a is positioned within the lens barrel 43b made of, for example, metal or resin.

The light receiving lens system 42 having such a configuration is aligned with the receiver 45 to form a receiving optical axis ROA along the third reference direction Z orthogonal to the first reference direction Y and the second reference direction, as a virtual optical axis extending from the center of the light receiving lens 43a to the center of the light receiving surface 47, to be described later, of the receiver 45.

The receiving optical axis ROA of the light receiving lens system 42 is shifted in the first reference direction Y with respect to the projection optical axis POA of the projection lens system 26. In this embodiment, the light receiving unit 41 is disposed above the light projection unit 21 in the first reference direction Y, so that the receiving optical axis ROA is offset upward in the first reference direction Y from the projection optical axis POA. Therefore, the principal ray of the reflected beam RB reflected toward the light receiving unit 41 from the light receiving reflecting portion 34b, which is shifted upward in the first reference direction Y from the projection reflecting portion 34a, is affected by the optical action from the light receiving lens system 42, so as to be guided along the receiving optical axis ROA, and an image is formed on the receiver 45.

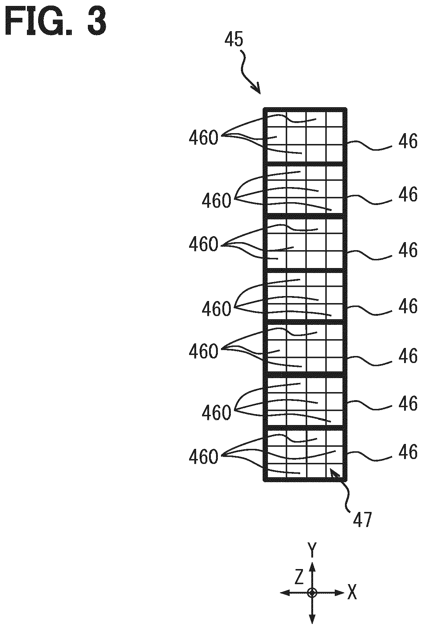

As shown in FIG. 3, the receiver 45 is constructed by arranging plural light receiving pixels 46 in an array on a substrate. The light receiving pixels 46 are arranged in a two-dimensional array along the first reference direction Y and the second reference direction X. Each light receiving pixel 46 includes plural light receiving elements 460 each formed of, for example, a single photon avalanche diode.

The receiver 45 has a light receiving surface 47 formed on one side of a substrate and presenting a rectangular outline with its long sides along the first reference direction Y and its short sides along the second reference direction X. The light receiving surface 47 is configured as a collection of incident surfaces of each light receiving pixel 46. As shown in FIG. 1, each light receiving pixel 46 receives the reflected beam RB that has entered the light receiving surface 47 from the light receiving lens system 42 as a line beam having the longitudinal direction along the first reference direction Y and the lateral direction along the second reference direction X.

The receiver 45 has an output circuit 48. The output circuit 48 performs sampling processing for each control period according to the control signal from the controller 51 in measurement frames for each scanning line that is associated with the rotation angle of the scanning mirror 32 synchronized with the projection period of the projection beam PB by the projector 22. At this time, the output circuit 48 generates a detection signal by synthesizing the output signals from the light receiving elements 460 of the light receiving pixels 46 for each control period. The detection signals generated in this manner are output from the output circuit 48 to the controller 51 for each scanning line.

The controller 51 controls observation of the target object in the detection area DA. The controller 51 is constructed mainly of at least one of a computer including a processor and a memory. The controller 51 is connected to the projector 22, the scanning motor 35, and the receiver 45.

The controller 51 outputs a control signal to the projector 22 so that the projection beam PB is generated by the oscillation of each laser oscillation element 24 for each projection period. The controller 51 outputs a control signal to the scanning motor 35 so as to control scanning and reflection by the scanning mirror 32 in synchronization with the period of projection by the projector 22. The controller 51 generates observation data of the target in the detection area DA by processing the detection signal output from the receiver 45 in accordance with the projection period by the projector 22 and the scanning and reflection by the scanning mirror 32.

Next, a positioning structure for positioning the photodetection device 10 with respect to a vehicle will be described.

As shown in FIGS. 1, 4 to 6, the photodetection device 10 includes the base 11 that defines reference directions X, Y, and Z common to the light projection unit 21 and the light receiving unit 41. The base 11 holds the projector 22 and the receiver 45 in a positioned state.

As shown in FIG. 1, the base 11 has a planar common reference surface 13 extending along the first reference direction Y and the second reference direction X on the outer wall surface. In this embodiment, the common reference surface 13 is provided on the opposite side of the scanning unit 31 across both the light projection unit 21 and the light receiving unit 41 in the third reference direction Z, and faces the opposite side. The base 11 is mounted on the vehicle with the common reference surface 13 in surface contact with a planar positioning reference surface 3 that is fixed in position on the vehicle. By mounting the base 11 in such a surface contact state, the base 11 can be positioned at a location on the vehicle where a desired detection area DA is set.

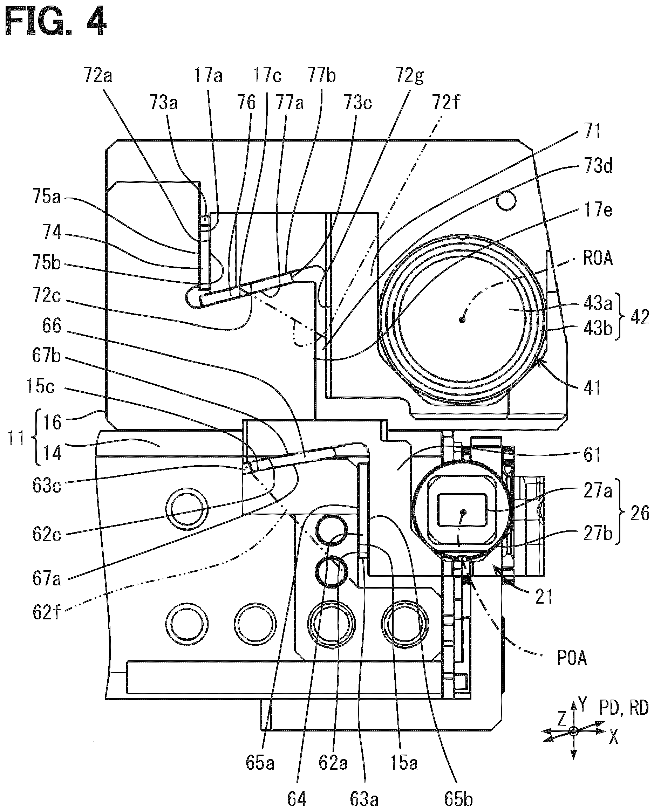

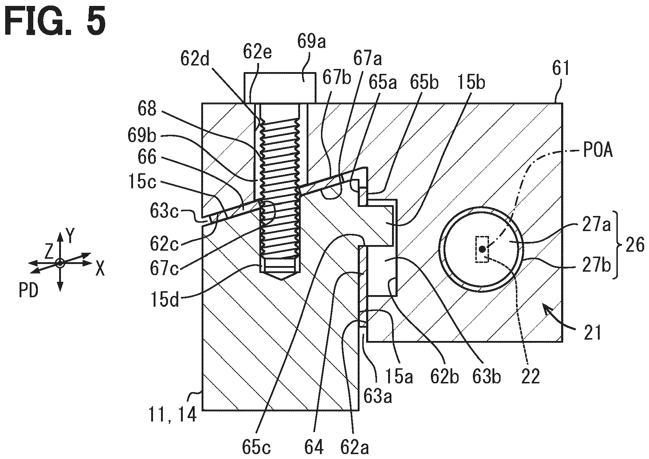

As shown in FIGS. 4 and 5, the base 11 has a block-shaped light projection reference portion 14 therein as a positioning structure exclusively for the light projection unit 21. The light projection reference portion 14 has a planar first light projection base surface 15a that extends along the first reference direction Y and the third reference direction Z on the side surface. The first light projection base surface 15a of this embodiment faces the projection lens system 26 in the second reference direction X.

The light projection reference portion 14 has a cylindrical projection protrusion 15b that projects from the first light projection base surface 15a. The projection protrusion 15b of this embodiment projects toward the projection lens system 26 in the second reference direction X.

The light projection reference portion 14 has a second light projection base surface 15c that is planar and extends along a projection intersecting direction PD that intersects the first reference direction Y and the second reference direction X, and the third reference direction Z, on the top surface. The second light projection base surface 15c of this embodiment is tilted upward so as to decline in the gravity direction of the first reference direction Y as extending away from the projection lens system 26 in the second reference direction X. Here, the projection intersecting direction PD, which determines the inclination state of the second light projection base surface 15c has different angles with the reference directions Y and X, so that the axial force dispersion component of the light projection screw 68, which will be described later, becomes larger in one of the reference directions Y and X, to which a greater vibration is applied in the vehicle.

The light projection reference portion 14 has a light projection screw hole 15d in the form of a female screw hole that opens in the second light projection base surface 15c. In this embodiment, the opening of the light projection screw hole 15d faces upward in the first reference direction Y.

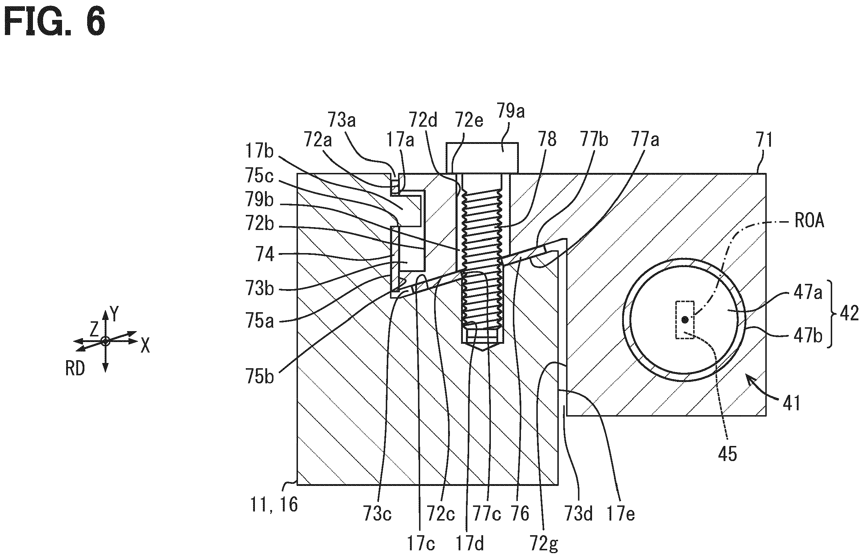

As shown in FIGS. 4 and 6, the base 11 has a block-shaped light receiving reference portion 16 therein as a positioning structure dedicated to the light receiving unit 41. The light receiving reference portion 16 has a planar first light receiving base surface 17a extending along the first reference direction Y and the third reference direction Z on its side surface. The first light receiving base surface 17a of this embodiment faces the light receiving lens system 42 in the second reference direction X. Further, the first light receiving base surface 17a of the present embodiment is provided on the side farthest from the light receiving lens system 42 of the two side surfaces of the light receiving reference portion 16 which form a step with a second light receiving base surface 17c to be described later.

The light receiving reference portion 16 has a cylindrical light receiving protrusion 17b protruding from the first light receiving base surface 17a. The light receiving protrusion 17b of this embodiment projects toward the light receiving lens system 42 in the second reference direction X.

The light receiving reference portion 16 has a planar second light receiving base surface 17c extending along the light receiving intersecting direction RD which intersects the first reference direction Y and the second reference direction X, and the third reference direction Z on the upper surface. The second light receiving base surface 17c of this embodiment is tilted downward in the gravity direction of the first reference direction Y as extending away from the light receiving lens system 42 in the second reference direction X. Here, regarding the light receiving intersecting direction RD which determines the inclination state of the second light receiving base surface 17c, the axial force dispersion component of the light receiving screw 78, which will be described later, is set to be larger in one of the reference directions Y and X, which causes greater vibration in the vehicle, such that the angles formed with the reference directions Y and X are different.

The light receiving reference portion 16 has a light receiving screw hole 17d in the shape of a female screw hole that opens in the second light receiving base surface 17c. In this embodiment, the opening of the light receiving screw hole 17d faces upward in the first reference direction Y.

The light receiving reference portion 16 has a planar third light receiving base surface 17e that extends along the first reference direction Y and the third reference direction Z on the side surface. The third light receiving base surface 17e of this embodiment faces the light receiving lens system 42 in the second reference direction X. The third light receiving base surface 17e in this embodiment is provided on the side closer to the light receiving lens system 42 of the two side surfaces of the light receiving reference portion 16 that form a step via the second light receiving base surface 17c.

As shown in FIGS. 4 and 5, the photodetection device 10 includes the projection holder 61, the first projection shim 64, the second projection shim 66, and the light projection screw 68 as a positioning structure dedicated to the light projection unit 21. The projection holder 61 is formed in a block shape from, for example, metal or resin. The projection holder 61 holds the lens barrel 27b, in which the light projection lens 27a is fixed, in the projection lens system 26 in a positioned state.

The projection holder 61 has a planar first light projection holder surface 62a that extends along the first reference direction Y and the third reference direction Z on the side surface. The first light projection holder surface 62a of this embodiment faces the first light projection base surface 15a, which is the opposite side to the projection lens system 26 in the second reference direction X. As a result, the first light projection holder surface 62a and the first light projection base surface 15a are opposite to and spaced apart from each other in the second reference direction X with a first projection gap 63a that extends along the first reference direction Y and the third reference direction Z.

The projection holder 61 has a light projection relief hole 62b in the form of a rectangular groove that opens in the first light projection holder surface 62a. The opening of the light projection relief hole 62b in this embodiment faces the first projection gap 63a in the second reference direction X. The projection protrusion 15b projects into the light projection relief hole 62b through a first projection shim 64 disposed in the first projection gap 63a as described later. Thereby, the projection protrusion 15b defines a space 63b with the light projection relief hole 62b on both sides in the first reference direction Y and on the tip side in the second reference direction X.

The projection holder 61 has a planar second light projection holder surface 62c extending along the projection intersecting direction PD and the third reference direction Z on its lower surface. The second light projection holder surface 62c of this embodiment is inclined in the gravity direction in the first reference direction Y as extending away from the projection lens system 26 in the second reference direction X, so as to face diagonally downward. Thereby, the second light projection holder surface 62c and the second light projection base surface 15c are opposite to and spaced apart from each other in the first reference direction Y with a second projection gap 63c that extends along the projection intersecting direction PD and the third reference direction Z. Here, the projection intersecting direction PD that determines the tilt state of the second light projection holder surface 62c is set to be substantially the same direction as the projection intersecting direction PD that determines the tilt state of the second light projection base surface 15c.

The projection holder 61 has a cylindrical light projection loose insertion hole 62d penetrating from the second light projection holder surface 62c to an upper surface 62e on the opposite side in the first reference direction Y. In this embodiment, each opening of the light projection loose insertion hole 62d faces the gravity direction and the opposite upward direction in the first reference direction Y. Further, in this embodiment, the inner diameter of the light projection loose insertion hole 62d is set to be larger than the outer diameter of the light projection screw 68.

In the projection holder 61, the second light projection holder surface 62c and the first light projection holder surface 62a are continuous with each other so as to form an acute angle. The projection holder 61 is reinforced with increased rigidity by a plate-shaped light projection rib 62f spanning from the second light projection holder surface 62c to the first light projection holder surface 62a. Note that the light projection rib 62f may not be provided.

The first projection shim 64 is made of, for example, metal or resin, and is formed into a flat plate shape as a whole. The first projection shim 64 is replaceable by a single piece of shim material or by a combination of multiple pieces of shim material. The first projection shim 64 is arranged in a first projection gap 63a between the first light projection base surface 15a and the first light projection holder surface 62a, and the thickness direction as a whole is substantially aligned with the second reference direction X. As a result, in the first projection shim 64, one plate surface 65a is in surface contact with the first light projection base surface 15a, and the other plate surface 65b is in surface contact with the first light projection holder surface 62a.

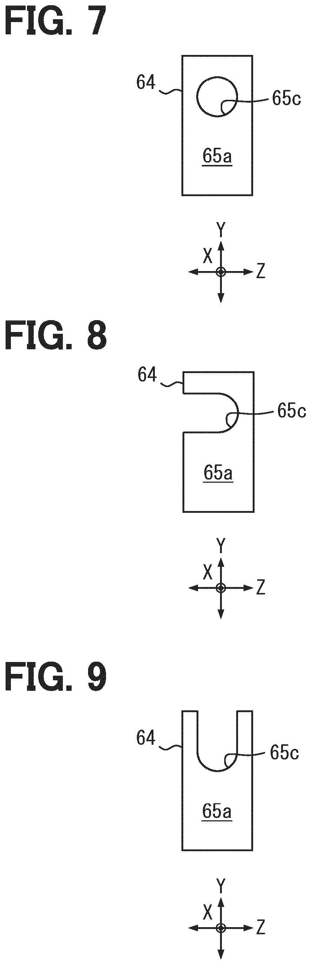

The first projection shim 64 has a first light projection through hole 65c through which the projection protrusion 15b is fitted in the first projection gap 63a. The first light projection through hole 65c of this embodiment may be formed in the shape of a cylindrical hole that opens only in the second reference direction X, as shown in FIG. 7. Alternatively, as shown in FIGS. 8 and 9, the first light projection through hole 65c may be formed in the shape of a long hole that opens not only in the second reference direction X but also in the third reference direction Z or the first reference direction Y.

As shown in FIGS. 4 and 5, the second projection shim 66 is made of, for example, metal or resin, and is formed into a flat plate shape as a whole. The second projection shim 66 is replaceable by a single piece of shim material or by a combination of plural pieces of shim material. The second projection shim 66 is arranged in the second projection gap 63c between the second light projecting base surface 15c and the second light projection holder surface 62c, and the thickness direction as a whole is essentially aligned in the perpendicular direction of the projection intersecting direction PD. As a result, in the second projection shim 66, one plate surface 67a is in surface contact with the second light projection base surface 15c, and the other plate surface 67b is in surface contact with the second light projection holder surface 62c.

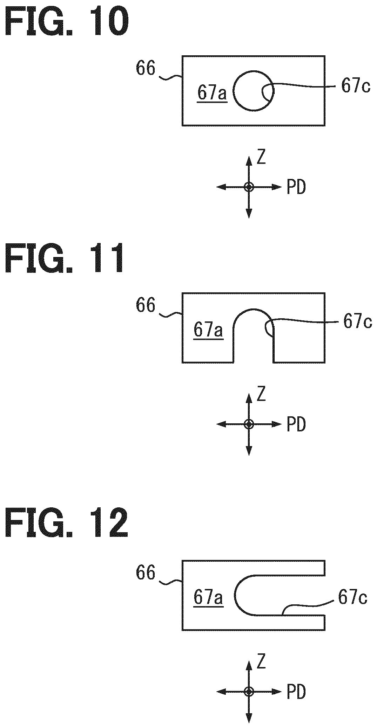

The second projection shim 66 has a second light projection through hole 67c through which the light projection screw 68 is fitted in the second projection gap 63c. The second light projection through hole 67c of this embodiment may be formed in the shape of a cylindrical hole that opens only in the direction orthogonal to the projection intersecting direction PD, as shown in FIG. 10. Alternatively, the second light projection through hole 67c is formed in a long hole shape that opens not only in the direction orthogonal to the projection intersecting direction PD but also in the third reference direction Z or the projection intersecting direction PD, as shown in FIGS. 11 and 12.

As shown in FIGS. 4 and 5, the light projection screw 68 is made of metal or the like and has a male screw shape. The light projection screw 68 fixes the projection holder 61 to the base 11 by screwing along the first reference direction Y. The light projection screw 68 is inserted into the light projection loose insertion hole 62d with the head 69a in contact with the upper surface 62e of the projection holder 61 on the opposite side in the first reference direction Y from the second light projection holder surface 62c. The light projection screw 68 is loosely inserted into the light projection loose insertion hole 62d with a circumferential space 69b. At the same time, the light projection screw 68 is screwed to the light projection screw hole 15d of the light projection reference portion 14 through the second light projection through hole 67c of the second projection shim 66 within the second projection gap 63c.

In the light projection screw 68 of this embodiment, the first reference direction Y, which extends from the head 69a in contact with the projection holder 61 to the screwing side with the base 11, substantially coincides with the gravity direction in the vertical direction. In the positioning structure exclusively for the light projection unit 21 to fix by the light projection screw 68, the projection holder 61 that holds the projection lens system 26 is positioned in each of the reference directions X, Y, and Z relative to the base 11 that holds the projector 22.

Here, the relative position of the projection holder 61 in the first reference direction Y with respect to the base 11 is determined by the size in the first reference direction Y that corresponds to the size of the second projection shim 66 in the thickness direction. Further, the relative position of the projection holder 61 with respect to the base 11 in the second reference direction X is determined by the size of the first projection shim 64 in the thickness direction that substantially coincides with the second reference direction X. By such positioning, the projection lens system 26 and the projector 22 are aligned on the projection optical axis POA that is orthogonal to the first reference direction Y and the second reference direction X.

As shown in FIGS. 4 and 6, the photodetection device 10 includes a light receiving holder 71, a first light receiving shim 74, a second light receiving shim 76, and a light receiving screw 78 as a positioning structure exclusively for the light receiving unit 41. The light receiving holder 71 is formed into a block shape of, for example, metal or resin. The light receiving holder 71 holds the lens barrel 43b of the light receiving lens system 42, in which the light receiving lens 43a is fixed, in a positioned state.

The light receiving holder 71 has a planar first light receiving holder surface 72a that extends along the first reference direction Y and the third reference direction Z on the side surface. The first light receiving holder surface 72a of this embodiment faces the first light receiving base surface 17a, which is the opposite side to the light receiving lens system 42 in the second reference direction X. Further, the first light receiving holder surface 72a of the present embodiment is provided on the side farthest from the light receiving lens system 42 of the two side surfaces that form a step with a second light receiving holder surface 72c. As a result, the first light receiving holder surface 72a and the first light receiving base surface 17a face each other with a first light receiving gap 73a that extends along the first reference direction Y and the third reference direction Z in the second reference direction X.

The light receiving holder 71 has a rectangular groove-shaped light receiving relief hole 72b that opens in the first light receiving holder surface 72a. The opening of the light receiving relief hole 72b of this embodiment faces the first light receiving gap 73a in the second reference direction X. The light receiving protrusion 17b projects into the light receiving relief hole 72b through a second light receiving shim 76 arranged in the first light receiving gap 73a. Thereby, a space 73b is defined between the light receiving protrusion 17b and the light receiving relief hole 72b on both sides in the first reference direction Y and on the tip side in the second reference direction X.

The light receiving holder 71 has a planar second light receiving holder surface 72c that extends along the light receiving intersecting direction RD and the third reference direction Z on the lower surface. The second light receiving holder surface 72c of this embodiment is tilted in the gravity direction in the first reference direction Y as extending from the light receiving lens system 42 in the second reference direction X, so as to face diagonally downward. As a result, the second light receiving holder surface 72c and the second light receiving base surface 17c face each other with a second light receiving gap 73c that extends in the light receiving intersecting direction RD and the third reference direction Z in the first reference direction Y. Here, the light receiving intersecting direction RD that determines the inclination state of the second light receiving holder surface 72c is set to be substantially the same direction as the light receiving intersecting direction RD that determines the inclination state of the second light receiving base surface 17c.

The light receiving holder 71 has a light receiving loose insertion hole 72d in the shape of a cylindrical hole penetrating from the second light receiving holder surface 72c to the upper surface 72e on the opposite side in the first reference direction Y. In this embodiment, each opening of the light receiving loose insertion hole 72d faces the gravity direction and the opposite upward direction in the first reference direction Y. Further, in this embodiment, the inner diameter of the light receiving loose insertion hole 72d is set larger than the outer diameter of the light receiving screw 78.

The light receiving holder 71 has a planar third light receiving holder surface 72g that extends along the first reference direction Y and the third reference direction Z on the side surface. The third light receiving holder surface 72g of this embodiment faces the third light receiving base surface 17e, which is the opposite side to the light receiving lens system 42 in the second reference direction X. Further, the third light receiving holder surface 72g of this embodiment is provided on the side surface closer to the light receiving lens system 42 of the two side surfaces that form a step with the second light receiving holder surface 72c.

In the light receiving holder 71, the third light receiving holder surface 72g and the second light receiving holder surface 72c are continuous with each other so as to form an acute angle. The light receiving holder 71 is reinforced with increased rigidity by a plate-shaped light receiving rib 72f spanning from the second light receiving holder surface 72c to the third light receiving holder surface 72g. The light receiving rib 72f does not necessarily have to be provided.

The first light receiving shim 74 is made of, for example, metal or resin and has a generally flat plate shape. The first light receiving shim 74 is replaceable by a single piece of shim material or by a combination of pieces of shim material. The first light receiving shim 74 is arranged in the first light receiving gap 73a between the first light receiving base surface 17a and the first light receiving holder surface 72a, and the thickness direction is substantially aligned with the second reference direction X. As a result, in the first light receiving shim 74, one plate surface 75a is in surface contact with the first light receiving base surface 17a, and the other plate surface 75b is in surface contact with the first light receiving holder surface 72a.

The first light receiving shim 74 has a first light receiving through hole 75c into which the light receiving protrusion 17b is fitted in the first light receiving gap 73a. The first light receiving through hole 75c of this embodiment may be formed in the shape of a cylindrical hole that opens only in the second reference direction X, similar to the first light projection through hole 65c of the first projection shim 64. Alternatively, the first light receiving through hole 75c is formed in the shape of a long hole that opens not only in the second reference direction X but also in the third reference direction Z or the first reference direction Y, in accordance with the first light projection through hole 65c.

Here, the third light receiving holder surface 72g and the third light receiving base surface 17e face each other with a third light receiving gap 73d that extends along the first reference direction Y and the third reference direction Z in the second reference direction X. Therefore, the first light receiving shim 74 may be arranged in the third light receiving gap 73d instead of the first light receiving gap 73a. That is, the third light receiving gap 73d may function as a first light receiving gap in which the first light receiving shim 74 is arranged. In this case, the light receiving relief hole 72b is preferably opened to the third light receiving holder surface 72g, and the light receiving protrusion 17b is preferably protruded from the third light receiving base surface 17e.

The second light receiving shim 76 is made of, for example, metal or resin, and is formed into a flat plate shape as a whole. The second light receiving shim 76 is replaceable by a single piece of shim material or a combination of pieces of shim material. The second light receiving shim 76 is inserted into the second light receiving gap 73c between the second light receiving base surface 17c and the second light receiving holder surface 72c, and the thickness direction is substantially aligned with the perpendicular direction of the light receiving intersecting direction RD. As a result, in the second light receiving shim 76, one plate surface 77a is in surface contact with the second light receiving base surface 17c, and the other plate surface 77b is in surface contact with the second light receiving holder surface 72c.

The second light receiving shim 76 has a second light receiving through hole 77c through which the light receiving screw 78 is fitted in the second light receiving gap 73c. The second light receiving through hole 77c of this embodiment may be formed in the shape of a cylindrical hole that opens only in the direction orthogonal to the light receiving intersecting direction RD, similar to the second light projection through hole 67c of the second projection shim 66. Alternatively, the second light receiving through hole 77c may be formed as an elongated hole that opens not only in the direction perpendicular to the light receiving intersecting direction RD, but also in the third reference direction Z or the light receiving intersecting direction RD, similar to the second light projection through hole 67c.

The light receiving screw 78 is made of metal or the like and has a male screw shape. The light receiving screw 78 fixes the light receiving holder 71 to the base 11 by screwing along the first reference direction Y. For this purpose, the light receiving screw 78 is loosely inserted into the light receiving loose insertion hole 72d in the circumferential space 79b with the head 79a in contact with the upper surface 72e of the light receiving holder 71 on the opposite side in the first reference direction Y from the second light receiving holder surface 72c. At the same time, the light receiving screw 78 is screwed into the light receiving screw hole 17d of the light receiving reference portion 16 through the second light receiving through hole 77c of the second light receiving shim 76 within the second light receiving gap 73c.

In the light receiving screw 78 of this embodiment, the first reference direction Y extending from the head 79a in contact with the light receiving holder 71 toward the base 11 substantially coincides with the gravity direction of the vertical direction. In such a positioning structure dedicated to the light receiving unit 41 by the light receiving screw 78, the light receiving holder 71 holding the light receiving lens system 42 is rotated in each reference direction X, Y, Z with respect to the base 11 holding the receiver 45.

Here, the relative position of the light receiving holder 71 with respect to the base 11 in the first reference direction Y is determined by the size in the first reference direction Y, which corresponds to the size of the second light receiving shim 76 in the thickness direction. Further, the relative position of the light receiving holder 71 with respect to the base 11 in the second reference direction X is determined by the size of the first light receiving shim 74 in the thickness direction that substantially coincides with the second reference direction X. By such positioning, the light receiving lens system 42 and the receiver 45 are aligned on the receiving optical axis ROA which is perpendicular to the first reference direction Y and the second reference direction X.

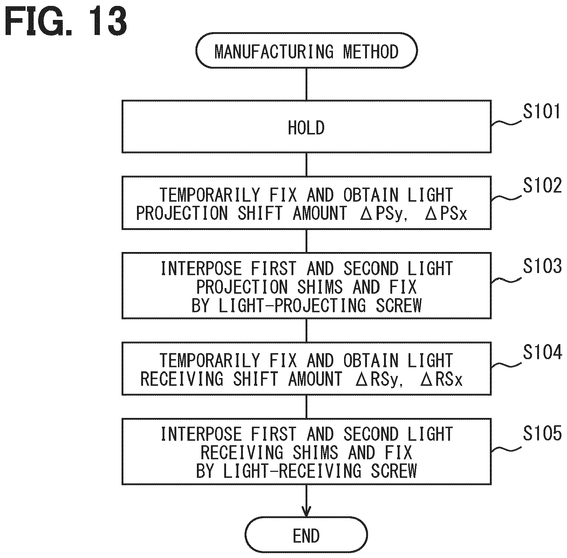

Next, a manufacturing method of manufacturing the photodetection device 10 will be described according to the flowchart shown in FIG. 13. The flow of this manufacturing method proceeds automatically by an adjustment system 100, which will be described later. Note that each "S" in the flow of this manufacturing method indicates steps for manufacturing the photodetection device 10.

In S101 of the manufacturing method, the scanning unit 31, the projector 22, and the receiver 45 are held on the base 11. At the same time, in S101, the projection holder 61 and the light receiving holder 71 hold the projection lens system 26 and the light receiving lens system 42, respectively.

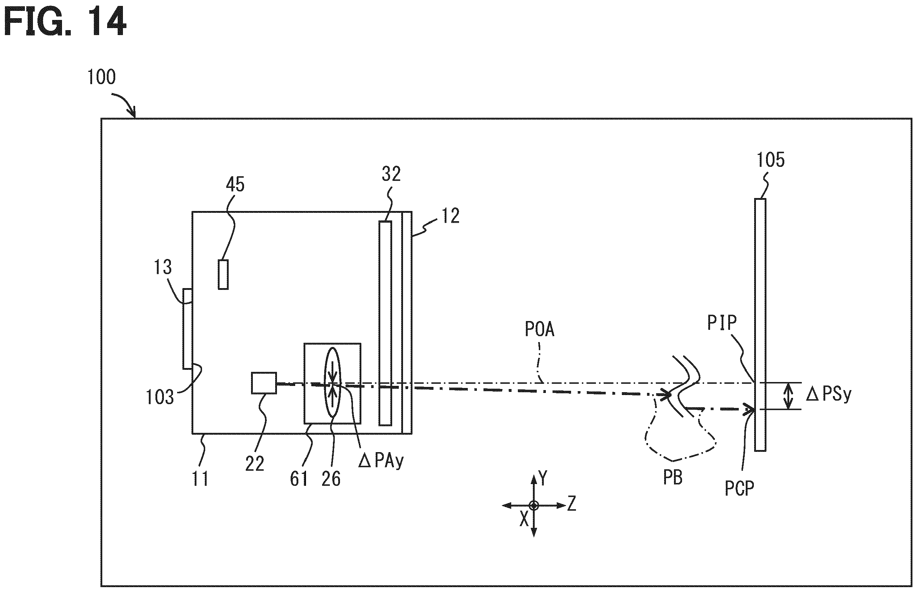

In S102 of the manufacturing method, the relative position of the projection holder 61 with respect to the base 11 is temporarily fixed, and the light projection shift amount ΔPSy in the first reference direction Y and the light projection shift amount ΔPSx in the second reference direction X are obtained as shown in FIGS. 14 to 16, of the projection beam PB with respect to the projection optical axis POA.

Specifically, as shown in FIG. 14, in S102, the base 11 is set in the adjustment system 100. At this time, the base 11 is positioned by bringing the common reference surface 13 into surface contact with an adjustment reference surface 103 provided in the adjustment system 100 corresponding to the positioning reference surface 3.

Next, in S102, the first projection shim 64 and the second projection shim 66 whose initial sizes are set are inserted into the first projection gap 63a and the second projection gap 63c, respectively, and temporarily fastened by the light projection screw 68. At this time, the projection holder 61 is temporarily fixed to the base 11 which has been set in a positioned state in the adjustment system 100.

Further, as shown in FIGS. 14 to 16, in S102, the projection beam PB is projected onto the screen 105 provided in the adjustment system 100 through the optical window 12. At this time, the screen 105 is installed at an adjustment position spaced a predetermined distance from the adjustment reference surface 103 so as to correspond to the detection area DA outside of the vehicle. Further, at this time, the scanning mirror 32 is stopped at a predetermined rotation angle set for adjustment. Therefore, in the following explanation and FIGS. 14 to 16, the corresponding directions will also be described as reference directions X, Y, and Z, for convenience, in response to the rotation angle of the scanning mirror 32 outside of the scanning mirror 32, including the screen 105.

During the projection of the projection beam PB, in S102, the projection optical axis POA of the projector 22 held on the base 11 is assumed based on the design theory. Thus, as shown in FIGS. 14 to 16, the projection shift amount ΔPSy, ΔPSx of the projection beam PB from the projection optical axis POA is obtained on the screen 105. At this time, on the screen 105, the difference between the theoretically designed intersection PIP of the projection optical axis POA, which is the target position of the projection beam PB, and the center point PCP of the actually projected projection beam PB is obtained as the light projection shift amount ΔPSy, ΔPSx in the respective reference direction Y, X. At this time, the center point PCP of the projection beam PB can be extracted by, for example, the geometric center point of the beam spot on the screen 105 or a peak intensity point on the screen 105 by photographing with an infrared camera.

In addition, in S102, prior to obtaining the light projection shift amount ΔPSy, ΔPSx, fine adjustment may be made to the holding position of the projection lens system 26 by the projection holder 61 in the third reference directions Z so that the projected image of the projection beam PB can be confirmed on the screen 105. The fine adjustment at this time can be realized, for example, by sliding the fitting lens barrel 27b of the projection lens system 26 with respect to the holding hole of the projection holder 61.

As shown in FIG. 13, in S103 of the manufacturing method, the first projection shim 64 and the second projection shim 66 having the size corresponding to the projection shift amount ΔPSy, ΔPSx are arranged in the first projection gap 63a and the second projection gap 63c, respectively, to fix by the light projection screw 68.

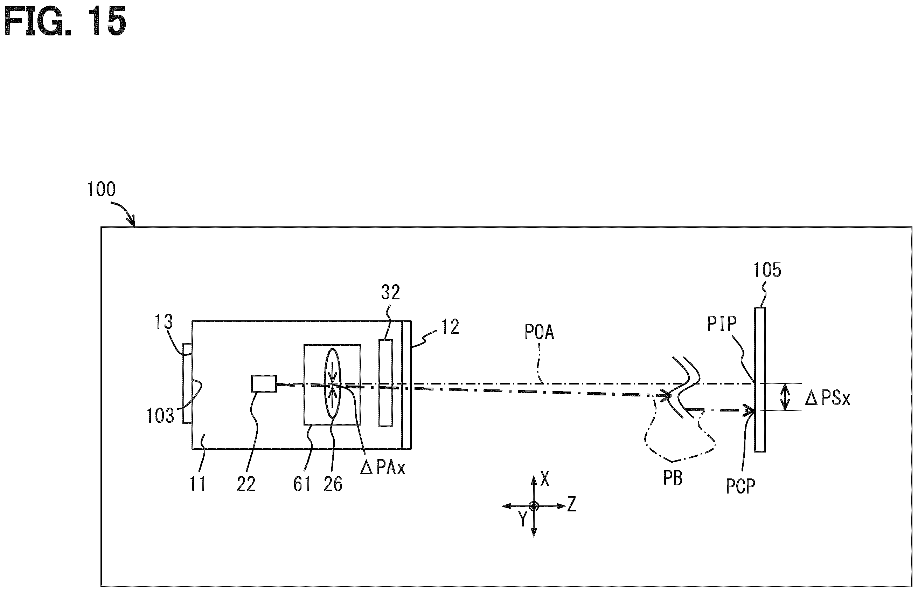

Specifically, in S103, as the position adjustment amount in each of the reference directions Y and X of the projection holder 61 relative to the base 11, as shown in FIGS. 14 and 15, the projection deviation amount ΔPAy, ΔPAx is acquired, which is the deviation of the lens optical axis of the projection lens system 26 from the projection optical axis POA based on the design theory of the projector 22. At this time, the projection deviation amount ΔPAy, ΔPAx is obtained by converting the projection shift amount ΔPSy, ΔPSx obtained in S102 based on the focal length of the projection lens system 26 and the projection distance between the projector 22 and the screen 105. Further, at this time, as the focal length, the focal length of one light projection lens 27a that constitutes the projection lens system 26 alone, or the combined focal length of the light projection lenses 27a that constitute the projection lens system 26 is used.

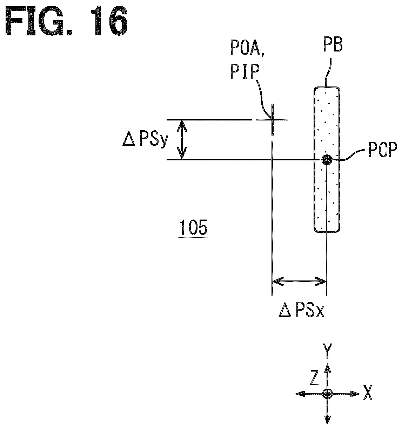

Subsequently, in S103, the second projection shim 66 of the initial size inserted in the second projection gap 63c in S102 is replaced with the second projection shim 66 increased or decreased from the initial size by the projection deviation amount ΔPAy in the first reference direction Y. At this time, for example, as shown in FIGS. 14 and 16, if the projection deviation amount ΔPAy of the projection lens system 26 occurs in the gravity direction of the first reference direction Y in accordance with the projection shift amount ΔPSy, the second projection shim 66 whose size is increased in the first reference direction Y is arranged in the second projection gap 63c.

At the same time, in S103, the first projection shim 64 of the initial size disposed in the first projection gap 63a in S102 is replaced with the first projection shim 64 having a size increased or decreased from the initial size by the projection deviation amount ΔPAx in the second reference direction X. At this time, as shown in FIGS. 15 and 16, for example, when the projection deviation amount ΔPAx of the projection lens system 26 occurs in the direction approaching the light projection reference portion 14 in the second reference direction X in accordance with the projection shift amount ΔPSx, the first projection shim 64 whose size is increased in the second reference direction X compared to the initial size is arranged in the first projection gap 63a.

In S103, it can also be said that the projection deviation amount ΔPAy, ΔPAx when replacing the first projection shim 64 and the second projection shim 66 of the initial size is a position correction amount to correct the relative position of the projection holder 61 with respect to the base 11. However, if at least one of the projection deviation amounts ΔPAy and ΔPAx can be assumed to be a zero value within the error range, there is no need to replace the shim corresponding to at least one of the first projection shim 64 and the second projection shim 66.

In S103, the projection holder 61 is screwed to the base 11 by the light projection screw 68, thereby positioning the projection lens system 26 on the projection optical axis POA with respect to the projector 22. At this time, the axial force of the light projection screw 68 due to the screwing along the first reference direction Y acts in a distributed manner also in the second reference direction X. Therefore, in S103, the loads acting on the projection shims 64 and 66 at two locations are simultaneously managed by controlling the tightening torque at one location when the axial force of the light projection screw 68 is generated.

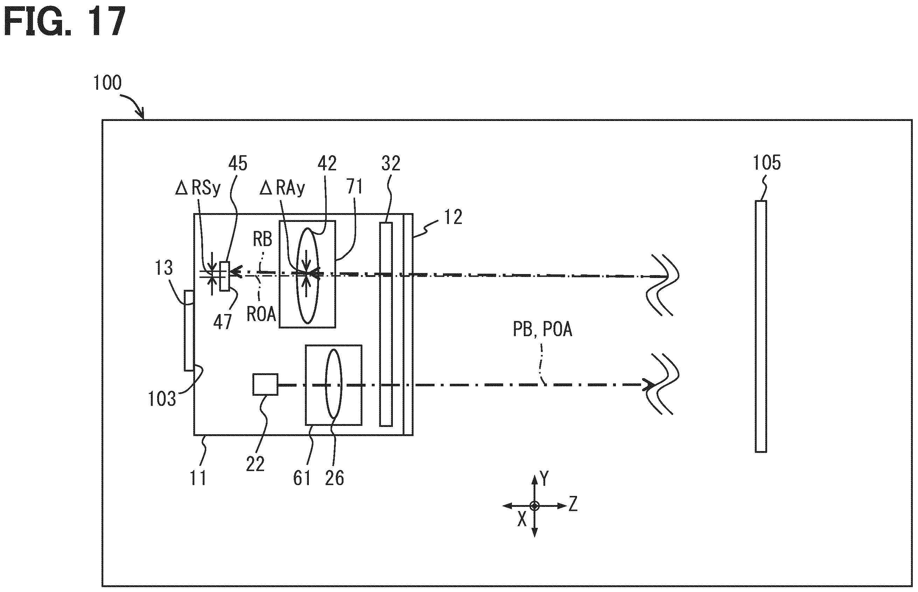

When the position adjustment of the light projection unit 21 is thus completed, the position adjustment of the light receiving unit 41 is then carried out as shown in FIG. 13. Specifically, in S104 of the manufacturing method, the relative position of the light receiving holder 71 with respect to the base 11 is temporarily fixed, and the light receiving shift amount ΔRSy in the first reference direction Y and the light receiving shift amount ΔRSx in the second reference direction X are obtained, as shown in FIGS. 17 to 19, of the reflected beam RB relative to the projection optical axis POA.

Specifically, in S104, the first light receiving shim 74 and the second light receiving shim 76, whose initial sizes have been set, are inserted into the first light receiving gap 73a and the second light receiving gap 73c, respectively, and temporarily fastened with the light receiving screw 78. At this time, the light receiving holder 71 is temporarily fixed to the base 11 that was set in the positioning state in S102 in the adjustment system 100.

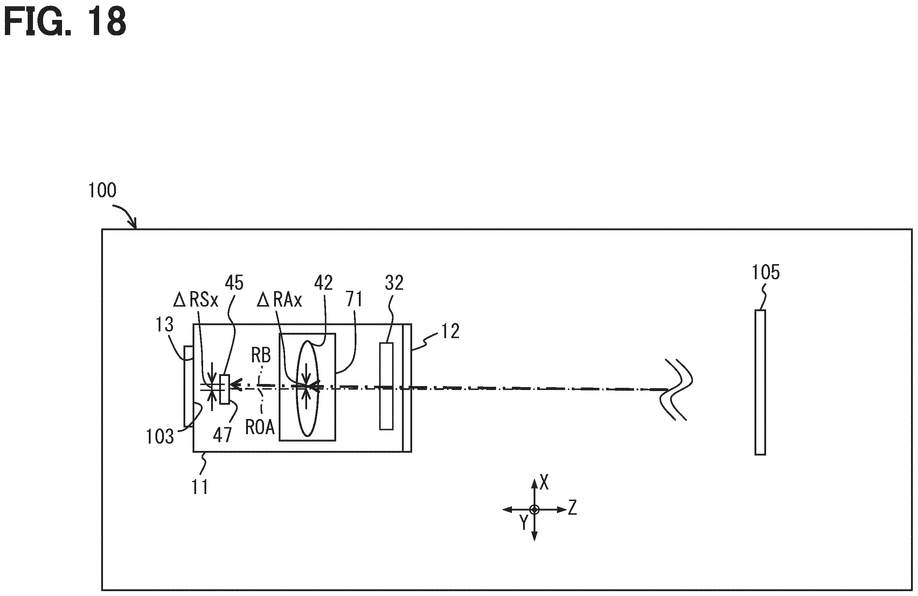

Subsequently, in S104, as shown in FIGS. 17 and 18, the projection beam PB is projected onto the screen 105 provided in the adjustment system 100 along the projection optical axis POA after the previous adjustment, so as to receive the reflected beam RB from the screen 105 by the receiver 45. At this time, the screen 105 is installed at an adjusted position spaced a predetermined distance from the adjustment reference surface 103 so as to correspond to the detection area DA outside of the vehicle. Also at this time, the scanning mirror 32 is stopped at a predetermined rotation angle set for adjustment. In the following explanation and in FIGS. 17 and 18, the corresponding directions will also be described as reference directions X, Y, and Z, for convenience, corresponding to the rotation angle of the scanning mirror 32 outside of the scanning mirror 32, including the screen 105, with respect to each of the reference directions X, Y, and Z of the photodetection device 10.

During the projection of the projection beam PB, in S104, the theoretically designed receiving optical axis ROA of the receiver 45 held on the base 11 is assumed, to acquire the light receiving shift amount ΔRSy, ΔRSx of the reflected beam RB from the receiving optical axis ROA on the light receiving surface 47, as shown in FIGS 17 to 19. At this time, on the light receiving surface 47, the difference between the theoretically designed intersection RIP of the receiving optical axis ROA, which is the target position of the reflected beam RB, and the center point RCP of the actually received reflected beam RB is obtained as the light receiving shift amount ΔRSy, ΔRSx in each reference direction Y, X. At this time, as the center point RCP of the reflected beam RB, for example, the geometric center point of the beam spot on the light receiving surface 47 or the peak intensity point on the light receiving surface 47 can be extracted based on the detection signal from the output circuit 48.

In S104, prior to obtaining the light receiving shift amount ΔRSy, ΔRSx, fine adjustment can be made to the holding position of the light receiving lens system 42 by the light receiving holder 71 in the third reference direction Z so that the reflected beam RB can be imaged on the light receiving surface 47. The fine adjustment at this time can be realized, for example, by sliding the fitting lens barrel 43b of the light receiving lens system 42 with respect to the holding hole of the light receiving holder 71.

As shown in FIG. 13, in S105 of the manufacturing method, the first light receiving shim 74 and the second light receiving shim 76 having the size matching the light receiving shift amount ΔRSy, ΔRSx are inserted into the first light receiving gap 73a and the second light receiving gap 73c, respectively. Then, the light receiving screw 78 is screwed.

Specifically, in S105, as the position adjustment amount of the light receiving holder 71 relative to the base 11 in each reference direction Y, X, as shown in FIGS. 17 and 18, the light receiving deviation amount ΔRAy, ΔRAx of the lens optical axis of the light receiving lens system 42 is obtained, which is deviated from the receiving optical axis ROA on the design theory of the receiver 45. At this time, the light receiving deviation amount ΔRAy, ΔRAx is obtained by converting the light receiving shift amount ΔRSy, ΔRSx obtained in S104, respectively, based on the focal length of the light receiving lens system 42 and the light receiving distance between the receiver 45 and the screen 105. Further, at this time, as the focal length, the focal length of one light receiving lens 43a that constitutes the light receiving lens system 42 alone, or the combined focal length of the light receiving lenses 43a that constitute the light receiving lens system 42 is used.

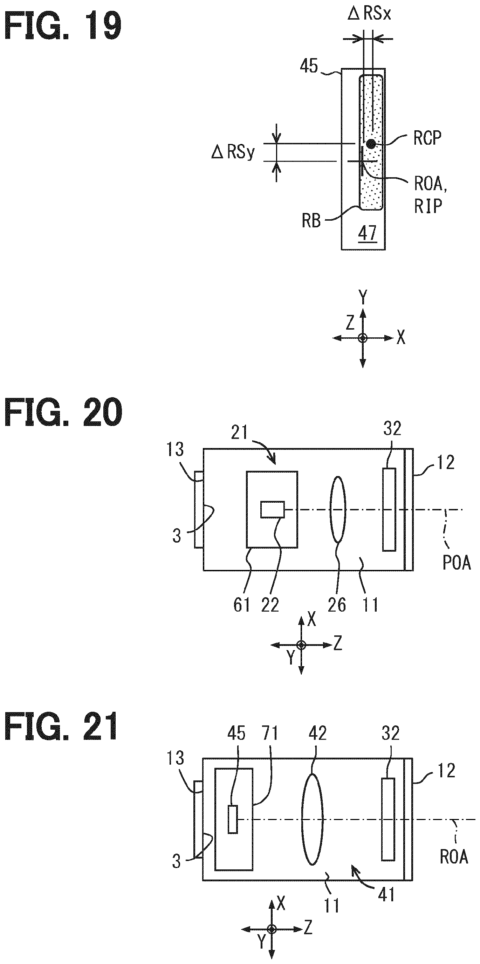

Next, in S105, the second light receiving shim 76 of the initial size inserted in the second light receiving gap 73c in S104 is replaced with the second light receiving shim 76 having a size increased or decreased from the initial size by the light receiving deviation amount ΔRAy in the first reference direction Y. At this time, for example, as shown in FIGS. 17 and 19, if the light receiving deviation amount ΔRAy of the light receiving lens system 42 occurs in the direction opposite to the gravity direction in the first reference direction Y in accordance with the light receiving shift amount ΔRSy, the second light receiving shim 76 whose size is smaller than the initial size in the first reference direction Y is arranged in the second light receiving gap 73c.

At the same time, in S105, the first light receiving shim 74 of the initial size inserted in the first light receiving gap 73a in S104 is replaced with the first light receiving shim 74 having the size increased or decreased from the initial size by the light receiving deviation amount ΔRAx in the second reference direction X. At this time, for example, as shown in FIGS. 18 and 20, when the light receiving shift amount ΔRAx of the light receiving lens system 42 occurs in the second reference direction X away from the light receiving reference portion 16 in accordance with the light receiving shift amount ΔRSx, the first light receiving shim 74 whose size is reduced in the second reference direction X from its initial size is arranged in the first light receiving gap 73a.

In S105, it can be said that the light receiving deviation amount ΔRAy, ΔRAx when replacing the first light receiving shim 74 and the second light receiving shim 76 of the initial size is a position correction amount to correct the relative position of the light receiving holder 71 with respect to the base 11. However, if at least one of the light receiving deviation amounts ΔRAy and ΔRAx is assumed to be zero within the error range, the replacement of the shim corresponding to at least one of the first light receiving shim 74 and the second light receiving shim 76 becomes unnecessary.

In S105, the light receiving lens system 42 is positioned on the receiving optical axis ROA with respect to the receiver 45 by screwing the light receiving holder 71 to the base 11 using the light receiving screw 78. At this time, the axial force of the light receiving screw 78 due to screwing along the first reference direction Y acts in the second reference direction X in a dispersed manner. In view of this, in S105, the tightening torque that generates the axial force of the light receiving screw 78 is controlled at one location, when the screw is fastened, thereby simultaneously managing the loads acting on the light receiving shims 74, 76 at two locations. The photodetection device 10 completed by the manufacturing method described above can be used in a vehicle with the common reference surface 13 in surface contact with the positioning reference surface 3 shown in FIG. 1.

### (Actions and Effects)

The actions and effects of this embodiment will be described below.

According to this embodiment, the projector 22 and the projection lens system 26 are held by the base 11 that defines the first reference direction Y and the second reference direction X perpendicular to each other, and the projection holder 61 positioned in the reference directions X, Y relative to the base 11 to be positioned on a vehicle which is an arrangement target. Therefore, between the base 11 and the light projection holder 61, the first projection shim 64 is disposed in the first projection gap 63a that extends along the first reference direction Y, and the second projection shim 66 is disposed in the second projection gap 63c that extends along the projection intersecting direction PD that intersects with the first reference direction Y and the second reference direction X.

Accordingly, in response to the size adjustment of the first projection shim 64 and the second projection shim 66 which are respectively replaceable for the first projection gap 63a and the second projection gap 63c, the relative position of the base 11 and the projection holder 61 are adjusted in the first reference direction Y and the second reference direction X, such that the projector 22 and the projection lens system 26 can be positioned on the projection optical axis POA. Furthermore, at the intervening interface of the second projection shim 66 that spreads along the projection intersecting direction PD, the axial force of the light projection screw 68 due to the screw fastening along the first reference direction Y is distributed also in the second reference direction X, such that the projection holder 61 can be fixed while being positioned with respect to the base 11. Therefore, it is possible to ensure the desired optical characteristics of the projection beam PB.

According to this embodiment, the first projection shim 64 and the second projection shim 66 can be adjusted in size so that the relative position of the projection holder 61 holding the projection lens system 26 is adjusted with respect to the base 11 holding the projector 22. Accordingly, it is possible to avoid failures caused by position adjustment of the projector 22, which is an electronic device, and to ensure the light projection characteristics of the projection beam PB.

According to this embodiment, the projection protrusion 15b of the base 11 enters the light projection relief hole 62b defined adjacent to the first projection gap 63a in the projection holder 61 by passing through the first projection shim 64 so as to define the space 63b in the first reference direction Y relative to the light projection relief hole 62b. According to this, the size-adjusted first projection shim 64 can be fixed in the correct position by the projection protrusion 15b, while the position of the projection holder 61 can be adjusted in the second reference direction X relative to the base 11 within the range of the space 63b. Therefore, it is possible to suppress the positional shift between the base 11 and the projection holder 61 due to the shift in orientation of the first projection shim 64, and to ensure the projection characteristics of the projection beam PB.

The light projection screw 68 according to this embodiment is loosely inserted into the projection holder 61 so that the head 69a is in contact with the projection holder 61, and is screwed into the base 11 through the second projection shim 66. According to this, the position of the projection holder 61 relative to the base 11 can be adjusted in the first reference direction Y while the second projection shim 66 whose size has been adjusted is fixed in a normal posture by the light projection screw 68. Therefore, it is possible to suppress the positional shift between the base 11 and the projection holder 61 due to the positional shift of the second projection shim 66, and to ensure the projection characteristics of the projection beam PB.

According to the present embodiment, the first reference direction Y extended from the head 69a of the light projection screw 68 in contact with the projection holder 61 to the base 11 is defined by the gravity direction of the vehicle on a horizontal plane. According to this, not only the axial force action of the light projection screw 68 due to the screw fixation but also the gravitational force on the projection holder 61 is dispersed in the second reference direction X. Even if the light projection screw 68 becomes loose, the positioning state of the projection holder 61 with respect to the base 11 can be maintained. Therefore, it is possible to suppress deterioration over time in the projection characteristics of the projection beam PB.

The light projection unit 21 according to the present embodiment generates a line-shaped projection beam PB having a longitudinal direction in the first reference direction Y and a lateral direction in the second reference direction X. As a result, it can be assumed that the positional accuracy required for the projection beam PB is stricter in the second reference direction X than in the first reference direction Y. Regarding this assumption, since the size adjustment is easy in the thickness direction of the first projection shim 64 that substantially coincides with the second reference direction X, the alignment of the projector 22 and the projection lens system 26 can be performed with high precision. Therefore, it is possible to improve the projection characteristics of the projection beam PB.

According to this embodiment, the relative position of the projection holder 61 with respect to the base 11 is temporarily fixed, and the light projection shift amount ΔPSy, ΔPSx of the projection beam PB with respect to the projection optical axis POA is obtained in the first reference direction Y and the second reference direction X. Therefore, the first projection shim 64 and the second projection shim 66 having the size matching the light projection shift amount ΔPSy, ΔPSx are arranged in the first projection gap 63a and the second projection gap 63c, respectively. The light projection screw 68 fixes the projection holder 61 to the base 11.

According to this, the size adjustment of the first projection shim 64 and the second projection shim 66 arranged in the first projection gap 63a and the second projection gap 63c, respectively, can be optimized with the positioning of the projector 22 and the projection lens system 26. At the same time, the positional adjustment of the projection holder 61 with respect to the base 11 can be completed. Furthermore, the axial force of the light projection screw 68 due to the screwing along the first reference direction Y is also dispersed in the second reference direction X, thereby fixing the projection holder 61 while being positioned relative to the base 11. Therefore, it is possible to ensure the desired optical characteristics of the projection beam PB.

According to this embodiment, the projection shift amount ΔPSy, ΔPSx of the projection beam PB from the projection optical axis POA is acquired on the screen 105 at a position corresponding to the outside of the vehicle. According to this, the projection shift amount ΔPSy, ΔPSx can be accurately measured on the screen 105 to be reflected on the size adjustment of the first projection shim 64 and the second projection shim 66 so as to optimize the alignment of the projector 22 and the projection lens system 26. Therefore, while simplifying the manufacturing process of the photodetection device 10 as much as possible by effectively utilizing the screen 105, it is possible to ensure the projection characteristics of the projection beam PB.

In this embodiment, the receiver 45 and the light receiving lens system 42 are respectively held by the base 11 which defines the first reference direction Y and the second reference direction X perpendicular to each other, and the light receiving holder 71 positioned in the reference directions Y, X relative to the base 11 which can be positioned relative to a vehicle as arrangement target. Therefore, between the base 11 and the light receiving holder 71, the first light receiving shim 74 is in the first light receiving gap 73a that extends along the first reference direction Y, and the second light receiving shim 76 is in the second light receiving gap 73c that extends along the light receiving intersecting direction RD intersecting the first reference direction Y and the second reference direction X.

Accordingly, in response to the size adjustment of the first light receiving shim 74 and the second light receiving shim 76, which are replaceable with respect to the first light receiving gap 73a and the second light receiving gap 73c, respectively, the relative position of the base 11 and the light receiving holder 71 is adjusted in the first reference direction Y and the second reference direction X. Thus, the receiver 45 and the light receiving lens system 42 can be aligned on the receiving optical axis ROA which is perpendicular to the reference directions Y, X. Furthermore, at the interposed interface of the second light receiving shim 76 that spreads along the light receiving intersecting direction RD, since the axial force of the light receiving screw 78 due to the screwing along the first reference direction Y is dispersed in the second reference direction X, the light receiving holder 71 can be fixed to the base 11 while being positioned. Therefore, it is possible to ensure the light receiving characteristics of the reflected beam RB as the desired optical characteristics.

According to this embodiment, it is possible to adjust the size of the first light receiving shim 74 and the second light receiving shim 76 so as to adjust the relative position of the light receiving holder 71 that holds the light receiving lens system 42 with respect to the base 11 that holds the receiver 45. According to this, it is possible to avoid failures caused by position adjustment of the receiver 45, which is an electronic device, and to ensure the light receiving characteristics of the reflected beam RB.

According to this embodiment, the light receiving protrusion 17b of the base 11 enters the light receiving relief hole 72b that opens toward the first light receiving gap 73a in the light receiving holder 71 through the first light receiving shim 74 to define the space 73b in the first reference direction Y between the light receiving protrusion 17b and the light receiving relief hole 72b. According to this, while the size-adjusted first light receiving shim 74 is fixed in a normal posture by the light receiving protrusion 17b, the position of the light receiving holder 71 is adjusted in the second reference direction X with respect to the base 11 within the space 73b. Therefore, it is possible to suppress the positional deviation between the base 11 and the light receiving holder 71 due to the positional deviation of the first light receiving shim 74, and to ensure the light receiving characteristics of the reflected beam RB.

The light receiving screw 78 according to this embodiment is loosely inserted into the light receiving holder 71 with the head 79a in contact with the light receiving holder 71, and is screwed into the base 11 through the second light receiving shim 76. According to this, it is possible to adjust the position of the light receiving holder 71 in the first reference direction Y with respect to the base 11 while fixing the size-adjusted second light receiving shim 76 in a normal posture by the light receiving screw 78. Therefore, it is possible to suppress the positional shift between the base 11 and the light receiving holder 71 due to the positional shift of the second light receiving shim 76, and to ensure the light receiving characteristics of the reflected beam RB.

In this embodiment, the first reference direction Y extended from the head 79a of the light receiving screw 78 in contact with the light receiving holder 71 toward the base 11 is defined as the gravity direction of a vehicle on a horizontal plane. According to this, not only the axial force of the light receiving screw 78 due to the screw fastening, but also the gravitational force on the light receiving holder 71 is distributed in the second reference direction X. Even if the light receiving screw 78 is loosened, the positioning of the light receiving holder 71 relative to the base 11 can be maintained. Therefore, it is possible to suppress the light receiving characteristics of the reflected beam RB from changing over time.

The light receiving unit 41 according to the present embodiment receives a line-shaped reflected beam RB having a longitudinal direction in the first reference direction Y and a lateral direction in the second reference direction X. As a result, the positional accuracy required for the reflected beam RB is stricter in the second reference direction X than in the first reference direction Y. Here, since the size adjustment is easy in the thickness direction of the first light receiving shim 74, which substantially coincides with the second reference direction X, the positioning of the receiver 45 and the light receiving lens system 42 can be accurately carried out. Therefore, it is possible to improve the light receiving characteristic of the reflected beam RB.

According to this embodiment, the relative position of the light receiving holder 71 with respect to the base 11 is temporarily fixed, and the light receiving shift amount ΔRSy, ΔRSx of the reflected beam RB with respect to the receiving optical axis ROA is obtained in the first reference direction Y and the second reference direction X. Therefore, the first light receiving shim 74 and the second light receiving shim 76 having the size matching the light receiving shift amount ΔRSy, ΔRSx are disposed in the first light receiving gap 73a and the second light receiving gap 73c, respectively, and the light receiving screw 78 secures the light receiving holder 71 to the base 11.

According to this, the size adjustment of the first light receiving shim 74 and the second light receiving shim 76 respectively disposed in the first light receiving gap 73a and the second light receiving gap 73c can be optimized for the alignment of the receiver 45 and the light receiving lens system 42. At the same time, the position adjustment of the light receiving holder 71 relative to the base 11 can be completed. Furthermore, the axial force of the light receiving screw 78 due to the screwing along the first reference direction Y is also dispersed in the second reference direction X, so that the light receiving holder 71 can be fixed while being positioned relative to the base 11. Therefore, it is possible to ensure the light receiving characteristics of the reflected beam RB as the desired optical characteristics.

According to this embodiment, the light receiving shift amount ΔRSy, ΔRSx of the reflected beam RB from the receiving optical axis ROA is acquired on the light receiving surface 47 provided on the receiver 45 to receive the reflected beam RB. According to this, the light receiving shift amount ΔRSy, ΔRSx is accurately measured on the light receiving surface 47, and is reflected in the size adjustment of the first light receiving shim 74 and the second light receiving shim 76 to optimize the alignment of the receiver 45 and the light receiving lens system 42. Therefore, it is possible to ensure the light receiving characteristics of the reflected beam RB while simplifying the manufacturing process of the photodetection device 10 as much as possible by effectively utilizing the receiver 45.

### (Other Embodiments)

Although one embodiment has been described, the present disclosure should not be limited to the above embodiment and may be applied to various other embodiments within the scope of the present disclosure.

Regarding the positioning structure dedicated to the light projection unit 21, the base 11 of a modified example may define a first reference direction Y along the horizontal direction and a second reference direction X along the vertical direction. Regarding the positioning structure dedicated to the light receiving unit 41, the base 11 of a modified example may define a first reference direction Y along the horizontal direction and a second reference direction X along the vertical direction.

In a modified example, the projection intersecting direction PD may be set to be at substantially equal angles (that is, about 45 degrees) with respect to both the reference directions Y and X. In a modified example, the light receiving intersecting direction RD may be set to be at substantially equal angles (that is, about 45 degrees) with respect to both the reference directions Y and X.

As shown in FIG. 20, in a modified light projection unit 21, the base 11 may hold the projection lens system 26, and the projection holder 61 may hold the projector 22. In this case, in S102 and S103 of the manufacturing method, the projection shift amount ΔPSy, ΔPSx of the projection beam PB and the projection deviation amount ΔPAy, ΔPAx of the projector 22 may be obtained with respect to the projection optical axis POA assumed to be the lens optical axis in the design theory of the projection lens system 26.

As shown in FIG. 21, in a modified light receiving unit 41, the base 11 may hold the light receiving lens system 42, and the light receiving holder 71 may hold the receiver 45. In this case, in S104 and S105 of the manufacturing method, the light receiving shift amount ΔRSy, ΔRSx of the reflected beam RB and the light receiving deviation amount ΔRAy, ΔRAx of the receiver 45 may be obtained with respect to the light receiving optical axis ROA assumed to be the lens optical axis on the design theory of the light receiving lens system 42.

In a modified example, a positioning structure dedicated to the light receiving unit 41 may not be adopted, and both the receiver 45 and the light receiving lens system 42 may be held by the base 11. In this manufacturing method, S104 and S105 are omitted.

In a modified example, a positioning structure dedicated to the light projection unit 21 may not be adopted, and both the projector 22 and the projection lens system 26 may be held by the base 11. In the manufacturing method of this case, S102 other than the positioning of the base 11 and S103 are omitted. In addition, as a manufacturing method in this case, or as a modified manufacturing method when a positioning structure dedicated to the light projection unit 21 is adopted, when obtaining the light receiving shift amount ΔRSy, ΔRSx in S104, a dedicated light source instead of the screen 105 is used in the adjustment system 100, and the position adjustment of the light receiving unit 41 may be performed separately from the light projection unit 21.

In a modified example, the projection protrusion 15b may be provided on the projection holder 61, and the light projection relief hole 62b may be provided on the light projection reference portion 14 of the base 11. In a modified example, the projection protrusion 15b is formed in a shape other than a cylinder, for example, a quadrangular pole shape, and accordingly, the first light projection through hole 65c of the first projection shim 64 is formed in a shape other than a cylindrical hole, for example, a rectangular hole shape. In a modified example, plural projection protrusions 15b may be provided, and accordingly, plural light projection relief holes 62b and plural first light projection through holes 65c may be provided.

In a modified example, the light receiving protrusion 17b may be provided on the light receiving holder 71, and the light receiving relief hole 72b may be provided on the light receiving reference portion 16 of the base 11. In a modified example, the light receiving protrusion 17b is formed in a shape other than a cylinder, such as a quadrangular prism, and accordingly, the first light receiving through hole 75c of the first light receiving shim 74 is formed in a shape other than a cylindrical hole, such as a rectangular hole. In a modified example, plural light receiving protrusions 17b may be provided, and the corresponding plural light receiving relief holes 72b and first light receiving through holes 75c may be provided.

In a modified example, the head 69a of the light projection screw 68 is in contact with the base 11 forming the light projection loose insertion hole 62d, and the light projection screw 68 is screwed into the projection holder 61 forming the light projection screw hole 15d. In the light projection screw 68 of the modified example, the first reference direction Y extended from the head 69a toward the screwing side may substantially coincide with the vertical direction opposite to the gravity direction. In a modified example, plural light projection screws 68 may be provided, and accordingly, plural light projection loose insertion holes 62d and plural light projection screw holes 15d may be provided.

In a modified example, the head 79a of the light receiving screw 78 is in contact with the base 11 forming the light receiving loose insertion hole 72d, and the light receiving screw 78 is screwed into the light receiving holder 71 forming the light receiving screw hole 17d. In the modified light receiving screw 78, the first reference direction Y extended from the head 79a toward the screwing side may substantially coincide with the direction opposite to the gravity direction in the vertical direction. In a modified example, plural light receiving screws 78 may be provided, and accordingly, plural light receiving loose insertion holes 72d and plural light receiving screw holes 17d may be provided.

In the manufacturing method of a modified example, in the temporarily fixing of S102, at least one of the first projection shim 64 and the second projection shim 66 is not disposed in the corresponding one of the first projection gap 63a and the second projection gap 63c. In the manufacturing method of a modified example, in the temporarily fixing of S104, at least one of the first light receiving shim 74 and the second light receiving shim 76 is not disposed in a gap corresponding to at least one of the first light receiving gap 73a and the second light receiving gap 73c.

The scanning unit 31 of a modified example is not limited to the mechanical swinging type that limits scanning in the horizontal direction as described above, but also a mechanical swinging type that limits scanning in the vertical direction, or a scanning unit that scans in both the horizontal and vertical directions. A possible mechanical swing type or the like may be adopted. In addition to the mechanical swing type, the scanning unit 31 of a modified example may employ various two-dimensional or three-dimensional scanning methods, such as a rotary type, a MEMS (Micro Electro Mechanical Systems) type, or a Lissajous type.

In a modified example, the projection beam PB may be directly projected onto an infrared camera instead of the screen 105, and the projection shift amount ΔPSy, ΔPSx may be extracted from the photographic results of the infrared camera. In a modified example, the beam spot shape of the projection beam PB and the corresponding reflected beam RB may be elongated in the second reference direction X, may have approximately the same width between the reference directions X and Y, or may be circular.

In a modified example, the moving object on which the photodetection device 10 is arranged may be, for example, a traveling robot whose running can be controlled remotely. In a modification, the arrangement target for placing the photodetection device 10 may be other than a moving body, for example, a stationary structure.

## Claims

1. A photodetection device (10) configured to project a projection beam (PB) toward outside and detect a reflected beam (RB) that is the projection beam reflected from the outside, the photodetection device comprising:
a base (11) that is positionable with respect to an arrangement target and defines a first reference direction (Y) and a second reference direction (X) orthogonal to each other;
a projection holder (61) positioned with respect to the base in the first reference direction and the second reference direction;
a projection unit (21) including a projector (22) held by one of the base and the projection holder, and a projection lens system (26) held by the other of the base and the projection holder, so as to guide the projection beam emitted from the projector through the projection lens system, the projector and the projection lens system being aligned on a projection optical axis (POA) perpendicular to the first reference direction and the second reference direction;
a first projection shim (64) replaceably interposed between the base and the projection holder, in a first projection gap (63a) extending along the first reference direction;
a second projection shim (66) replaceably interposed between the base and the projection holder, in a second projection gap (63c) extending along a projection intersecting direction (PD) intersecting the first reference direction and the second reference direction; and
a light projection screw (68) that fixes the projection holder to the base by screwing along the first reference direction.

2. The photodetection device according to claim 1, wherein
the base holds the projector, and
the projection holder holds the projection lens system.

3. The photodetection device according to claim 1 or 2, wherein
one of the base and the projection holder has a light projection relief hole (62b) that opens toward the first projection gap, and
the other of the base and the projection holder has a light projection protrusion (15b) passing through the first projection shim to define a space (63b) with the light projection relief hole in the first reference direction.

4. The photodetection device according to any one of claims 1 to 3, wherein
the light projection screw is loosely inserted and has a head (69a) in contact with one of the base and the projection holder, and
the light projection screw is screwed on the other of the base and the projection holder through the second projection shim.

5. The photodetection device according to claim 4, wherein
the first reference direction is defined in a gravity direction of the arrangement target on a horizontal plane to extend from the head of the light projection screw in contact with the projection holder toward a screwing side of the base.

6. The photodetection device according to any one of claims 1 to 5, wherein the projection unit generates the projection beam in a form of a line having a longitudinal direction in the first reference direction and a lateral direction in the second reference direction.

7. The photodetection device according to any one of claims 1 to 6, further comprising:
a light receiving holder (71) positioned relative to the base in the first reference direction and the second reference direction;
a light receiving unit (41) having a receiver (45) held by one of the base and the light receiving holder, and a light receiving lens system (42) held by the other of the base and the light receiving holder, which are aligned on a receiving optical axis (ROA) perpendicular to the first reference direction and the second reference direction, so as to image the reflected beam received by the receiver on the light receiving lens system;
a first light receiving shim (74) replaceably interposed between the base and the light receiving holder in a first light receiving gap (73a) extending along the first reference direction;
a second light receiving shim (76) replaceably interposed between the base and the light receiving holder in a second light receiving gap (73c) extending along a light receiving intersecting direction (RD) intersecting the first reference direction and the second reference direction; and
a light receiving screw (78) that fixes the light receiving holder to the base by screwing along the first reference direction.

8. The photodetection device according to claim 7, further comprising a scanning mirror (32) supported by the base to be driven to scan the projection beam from the projection unit toward outside and reflect the reflected beam from the outside toward the light receiving unit.

9. A photodetection device (10) configured to project a projection beam (PB) toward outside and detect a reflected beam (RB) that is the projection beam reflected from the outside, the photodetection device comprising:
a base (11) that is positionable with respect to an arrangement target and defines a first reference direction (Y) and a second reference direction (X) orthogonal to each other;
a light receiving holder (71) positioned relative to the base in the first reference direction and the second reference direction;
a light receiving unit (41) having a receiver (45) held by one of the base and the light receiving holder, and a light receiving lens system (42) held by the other of the base and the light receiving holder, which are aligned on a receiving optical axis (ROA) perpendicular to the first reference direction and the second reference direction, to focus the reflected beam received by the receiver on the light receiving lens system;
a first light receiving shim (74) replaceably interposed between the base and the light receiving holder in a first light receiving gap (73a) extending along the first reference direction;
a second light receiving shim (76) replaceably interposed between the base and the light receiving holder in a second light receiving gap (73c) that extends along a light receiving intersecting direction (RD) that intersects the first reference direction and the second reference direction; and
a light receiving screw (78) that fixes the light receiving holder to the base by screwing along the first reference direction.

10. The photodetection device according to any one of claims 7 to 9, wherein
the base holds the receiver, and
the light receiving holder holds the light receiving lens system.

11. The photodetection device according to any one of claims 7 to 10, wherein
one of the base and the light receiving holder has a light receiving relief hole (72b) that opens toward the first light receiving gap, and
the other of the base and the light receiving holder has a light receiving protrusion (17b) passing through the first light receiving shim to define a space (73b) with the light receiving relief hole in the first reference direction.

12. The photodetection device according to any one of claims 7 to 11, wherein
the light receiving screw is loosely inserted and has a head (79a) in contact with one of the base and the light receiving holder, and
the light receiving screw is screwed on the other of the base and the light receiving holder through the second light receiving shim.

13. The photodetection device according to claim 12, wherein
the first reference direction is defined in a gravity direction of the arrangement target on a horizontal plane to extend from the head of the light receiving screw in contact with the light receiving holder toward a screwing side of the base.

14. The photodetection device according to any one of claims 7 to 13, wherein the light receiving unit receives the reflected beam in a form of a line having a longitudinal direction in the first reference direction and a lateral direction in the second reference direction.

15. A method of manufacturing the photodetection device (10) according to any one of claims 1 to 8, the method comprising:
holding the projector by one of the base and the projection holder, and holding the projection lens system by the other of the base and the projection holder;
temporarily fixing a relative position of the projection holder with respect to the base, and obtaining a light projection shift amount (ΔPSy, ΔPSx) of the projection beam with respect to the projection optical axis in the first reference direction and the second reference direction; and
disposing the first projection shim and the second projection shim, each having a size corresponding to the light projection shift amount, respectively in the first projection gap and the second projection gap, and fixing the projection holder to the base by the light projection screw.

16. The method according to claim 15, wherein the obtaining of the light projection shift amount includes obtaining the light projection shift amount on a screen (105) at a position corresponding to the outside.

17. A method of manufacturing the photodetection device (10) according to any one of claims 7 to 14, the method comprising:
holding the receiver on one of the base and the light receiving holder, and holding the light receiving lens system on the other of the base and the light receiving holder;
temporarily fixing a relative position of the light receiving holder with respect to the base, and obtaining a light receiving shift amount (ΔRSy, ΔRSx) of the reflected beam with respect to the receiving optical axis in the first reference direction and the second reference direction; and
disposing the first light receiving shim and the second light receiving shim, each having a size corresponding to the light receiving shift amount, respectively in the first light receiving gap and the second light receiving gap, and fixing the light receiving holder to the base by the light receiving screw.

18. The method according to claim 17, wherein the obtaining of the light receiving shift amount includes obtaining the light receiving shift amount on a light receiving surface (47) provided on the receiver to receive the reflected beam.
